(19) Europäisches Patentamt / European Patent Office / Office européen des brevets

(11) **EP 4 080 754 A1**

(12) **EUROPÄISCHE PATENTANMELDUNG**

(43) Veröffentlichungstag:
26.10.2022 Patentblatt 2022/43

(21) Anmeldenummer: 21169810.5

(22) Anmeldetag: 22.04.2021

(51) Internationale Patentklassifikation (IPC):
H02P 3/02 (2006.01)    B23B 45/02 (2006.01)
B25J 9/00 (2006.01)    B66D 3/18 (2006.01)
B66C 13/08 (2006.01)    B23B 35/00 (2006.01)

(52) Gemeinsame Patentklassifikation (CPC):
**B23B 45/02; H02P 3/025;** B23B 35/00;
B25J 9/0006; B66C 13/085; B66D 3/18

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Schaer, Roland**
**9472 Grabs (CH)**
• **Wierer, Michael**
**6832 Röthis (AT)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN, SYSTEM UND ELEKTRONISCHES MODUL ZUM AUSGLEICH EINER GEWICHTSKRAFT EINES GEGENSTANDS**

(57) Die vorliegende Erfindung betrifft Verfahren zum Ausgleich einer Gewichtskraft eines Gegenstands in einem System, wobei der Gegenstand an einem Zugseil befestigt werden kann und wobei das System dazu eingerichtet ist, einen Ausgleichsvorgang in Bezug auf die Gewichtskraft des Gegenstands durchzuführen. Dieser Ausgleichsvorgang kann dadurch erfolgen, dass eine Drehzahl des Motors und/oder eine Ableitung der Drehzahl des Motors ermittelt wird, wobei ein Stromsollwert als Regelgröße in dem System hinterlegt wird, wenn die Drehzahl des Motors oder ihre Ableitung längere Zeit einen Grenzwert unterschreitet. Die Drehzahl des Motors oder ihre Ableitung korrespondieren mit einer Gewichtskraft des Gegenstands, die im Kontext der vorliegenden Erfindung ausgeglichen werden soll. Alternativ kann ein zur Aufrechterhaltung der ersten Position des Gegenstands erforderlich Stromwert oder ein dafür erforderliches MotorDrehmoment im System hinterlegt werden und ein Ausgleich der Gewichtkraft des Gegenstands unter Verwendung der zuvor hinterlegten Stromwerte oder Drehmomente erfolgen. In weiteren Aspekten betrifft die Erfindung ein System und ein elektronisches Modul zur Durchführung der vorgeschlagenen Ausgleichsverfahren.

Fig. 1

**Beschreibung**

Die vorliegende Erfindung betrifft Verfahren zum Ausgleich einer Gewichtskraft eines Gegenstands in einem System, wobei der Gegenstand an einem Zugseil befestigt werden kann und wobei das System dazu eingerichtet ist, einen Ausgleichsvorgang in Bezug auf die Gewichtskraft des Gegenstands durchzuführen. Dieser Ausgleichsvorgang kann dadurch erfolgen, dass eine Drehzahl des Motors und/oder eine Ableitung der Drehzahl des Motors ermittelt wird, wobei ein Stromsollwert als Regelgröße in dem System hinterlegt wird, wenn die Drehzahl des Motors oder ihre Ableitung längere Zeit einen Grenzwert unterschreitet. Die Drehzahl des Motors oder ihre Ableitung korrespondieren mit einer Gewichtskraft des Gegenstands, die im Kontext der vorliegenden Erfindung ausgeglichen werden soll. Alternativ kann ein zur Aufrechterhaltung der ersten Position des Gegenstands erforderlich Stromwert oder ein dafür erforderliches MotorDrehmoment im System hinterlegt werden und ein Ausgleich der Gewichtkraft des Gegenstands unter Verwendung der zuvor hinterlegten Stromwerte oder Drehmomente erfolgen. In weiteren Aspekten betrifft die Erfindung ein System und ein elektronisches Modul zur Durchführung der vorgeschlagenen Ausgleichsverfahren.

**Hintergrund der Erfindung:**

Die Benutzung von Werkzeuggeräten, wie Meißelgeräte, Bohrhämmer, Kernbohrgeräte oder Ähnliches, ist oft anstrengend und ermüdend, vor allem, wenn mit diesen Geräten über einen längeren Zeitraum gearbeitet wird. Werkzeuggeräte sind häufig schwer und die nach unten Richtung Erdboden wirkende Gewichtskraft eines solches Geräts führt dazu, dass Arbeiten mit solchen Geräten lediglich für einen begrenzten Zeitraum ausgeführt werden können, bevor eine Pause eingelegt werden muss. Dadurch kann allerdings ein Arbeitsfortschritt auf einer Baustelle verzögert werden, was aus verschiedenen Gründen unerwünscht ist.

Ferner kann das Arbeiten mit schweren Werkzeuggeräten über Jahre hinweg zu körperlichen Einschränkungen führen. Es besteht daher ein Bedürfnis, Mittel bereitzustellen, die die Arbeit mit schweren Werkzeuggeräten erleichtern und die Nutzer solcher Werkzeuggeräte wirksam vor gesundheitlichen Beeinträchtigungen schützen.

Im Stand der Technik sind beispielsweise passive Assistenzsysteme bekannt. Bei diesen passiven Assistenzsystemen kann ein Gegenstand an einem Bestandteil des Assistenzsystems befestigt werden, wobei der Gegenstand dann von dem Assistenzsystem gehalten wird. Gerade bei der Arbeit mit Werkzeuggeräten, die an einem Assistenzsystem befestigt werden sollen und mit denen mitunter sehr dynamisch gearbeitet wird, kann eine solche passive Aufhängung in manchen Anwendungsfällen keine ausreichende Unterstützung für den Nutzer bereitstellen.

Die Aufgabe, die der vorliegenden Erfindung zugrunde liegt, besteht somit darin, die vorstehend beschriebenen Mängel und Nachteile des Standes der Technik zu überwinden und ein Verfahren und ein System zum Ausgleich einer Gewichtskraft eines Gegenstands bereitzustellen, das insbesondere einfach zu handhaben ist. Darüber hinaus soll das bereitzustellende System und das Verfahren die Gewichtskraft eines Gegenstands in unterschiedlichen Anwendungsfällen und -situationen wirksam und zuverlässig ausgleichen. Die Fachwelt würde es ferner begrüßen, wenn das bereitzustellende System nicht nur eine statische, sondern auch eine dynamische Unterstützung des Systemnutzers ermöglichen könnte. Eine weitere Aufgabe, die der Erfindung zugrunde liegt, ist die Bereitstellung eines elektronischen Moduls als Antriebs- und Steuereinheit eines solchen Systems.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren zum Ausgleich einer Gewichtskraft eines Gegenstands in einem System, wobei der Gegenstand an einem Zugseil befestigt werden kann, wobei das Verfahren durch die folgenden Verfahrensschritte gekennzeichnet ist:

    a) Befestigen des Gegenstands an dem Zugseil,
    b) Ermitteln einer Drehzahl des Motors und/oder einer Ableitung der Drehzahl des Motors,
    c) Ermitteln eines Stromsollwerts bei längerem Unterschreiten eines Grenzwerts der Drehzahl des Motors,
    d) Ausgleich der Gewichtskraft des Gegenstands unter Verwendung des in Schritt c) ermittelten Stromsollwerts.

Es ist im Sinne der Erfindung bevorzugt, dass die Drehzahl des Motors oder ihre Ableitung mit der Gewichtskraft des Gegenstands korrespondiert, die mit dem vorgeschlagenen Verfahren ausgeglichen werden soll. Der Ausgleich der Gewichtskraft des Gegenstands erfolgt insbesondere dadurch, dass der zuvor ermittelte Stromsollwerts als Regelgröße verwendet wird. Das bedeutet im Sinne der Erfindung bevorzugt, dass die Gewichtskraft des Gegenstands ausgeglichen wird, indem der Motorstrom des Motors des Systems auf den Stromsollwerts geregelt wird.

Im Kontext des vorgeschlagenen Verfahrens wird ein Stromsollwerts S ermittelt. Dabei wird insbesondere derjenige Stromwert als Stromsollwerts festgelegt, bei dem die Drehzahl des Motors oder ihre Ableitung einen zuvor festgelegten Grenzwert unterschreitet. Es ist im Sinne der Erfindung bevorzugt, dass ein aktueller Stromwert als Stromsollwerts festgehalten und fix auf diesen geregelt wird, sobald der Gegenstand an dem Zugseil befestigt bzw. an dem System eingehängt ist. Die Ermittlung des Stromsollwerts erfolgt insbesondere dann, wenn die Drehzahl des Motors und/oder ihre Ableitung eine definiert lange Zeit einen Grenzwert unterschreitet. Der so ermittelte Stromsollwerts wird dann vorzugsweise zum Ausgleich der Gewichtskraft des Gegenstands verwendet, wobei der Stromsollwerts insbesondere die Regelungsgröße bzw. Regelgröße darstellt. Der Ausgleich der Gewichtskraft des Gegenstands erfolgt somit insbesondere unter Verwendung des zuvor ermittelten Stromsollwerts. Es ist im Sinne der Erfindung bevorzugt, dass der Motorstrom im Wesentlichen zu allen Zeiten, in denen das Gewicht des Gegenstands ausgeglichen werden soll, einen konstanten Wert annimmt. Die Formulierung, dass der Stromsollwerts «als Regelgröße» verwendet wird, stellt für den Fachmann keinen unklaren Begriff dar, weil der Fachmann weiß, dass damit eine Regelung auf diesen spezifischen Stromwert gemeint ist.

Im Kontext des vorgeschlagenen Verfahrens wird ein aktueller Stromsollwert festgehalten, wenn die Drehzahl des Motors des Systems oder ihre Ableitung einen Grenzwert unterschreitet. Anschließend wird dieser Stromsollwert als Regelgröße verwendet, d.h. es wird auf ihn geregelt. Vorzugsweise wird dadurch der Stromsollwert verwendet, um die Gewichtskraft des Gegenstands bzw. sein Gewicht auszugleichen.

Es ist im Sinne der Erfindung bevorzugt, dass die Drehzahl des Motors des Systems mit einer Geschwindigkeit des Zugseils des Systems korreliert. Mit anderen Worten besteht eine Verknüpfung zwischen der Motordrehzahl des Systems und der Geschwindigkeit des Zugseils. Mit noch anderen Worten entspricht die Drehzahl des Motors einer Geschwindigkeit des Zugseils des Systems. Im Kontext der vorliegenden Erfindung kann auf eine Positionsregelung umgeschaltet werden, wenn die Drehzahl des Motors des Systems einen Grenzwert überschreitet. Es ist im Sinne der Erfindung bevorzugt, dass die Ermittlung einer ersten Position X des Gegenstands im Sinne der Erfindung bevorzugt als Positionsregelung bezeichnet wird. Dafür kann vorteilhafterweise ein Positionsregler verwendet werden. Es ist im Sinne der Erfindung bevorzugt, dass die Positionsregelung abgeschlossen ist, wenn eine Geschwindigkeit des Gegenstands oder die Ableitung der Geschwindigkeit des Gegenstands eine definiert lange Zeit den Wert «null» annimmt.

In einer alternativen Ausgestaltung betrifft die Erfindung ein Verfahren zum Ausgleich einer Gewichtskraft eines Gegenstands in einem System, wobei der Gegenstand an einem Zugseil befestigt werden kann, wobei das Verfahren durch die folgenden Verfahrensschritte gekennzeichnet ist:

a) Ermitteln einer ersten Position des Gegenstands,
b) Ermitteln einer Drehzahl des Motors und/oder einer Ableitung der Drehzahl des Motors,
c) Hinterlegen der ersten Position als Regelgröße in dem System, wenn die Drehzahl des Motors und/oder die Ableitung der Drehzahl des Motors einen Grenzwert überschreitet,
d) Regelung der Position des Gegenstandes auf die hinterlegte Position, bis eine Geschwindigkeit des Gegenstands für einen Zeitraum Delta t im Wesentlichen «null» ist,
e1) Hinterlegen eines für eine Aufrechterhaltung der ersten Position erforderlichen Stromwerts I_X in dem System oder
e2) Hinterlegung eines für eine Aufrechterhaltung der ersten Position erforderlichen Drehmoments M_X in dem System,
f) Ausgleich der Gewichtskraft unter Verwendung des in Schritt e1 hinterlegten Stromwerts I_X oder des in Schritt e2 hinterlegten Drehmoments M_X.

Es ist in dieser Ausgestaltung der Erfindung bevorzugt, dass durch die Regelung der zuvor ermittelten bzw. hinterlegten Strom- und Drehmomentdaten, ein Ausgleich der Gewichtskraft des Gegenstands ermöglicht werden kann. Dadurch kann insbesondere eine Möglichkeit bereitgestellt werden, im Wesentlichen kraftfrei mit dem Gegenstand zu arbeiten, da dem Nutzer des Systems als besonderer Vorteil der Erfindung die Gewichtskraft des Gegenstands «abgenommen» wird.

Es ist im Sinne der Erfindung bevorzugt, dass das Verfahren eine Regelung der Position des Gegenstandes auf die hinterlegte Position erfolgt, solange bis die Position des Gegenstands konstant ist. Eine Position des Gegenstands wird vorzugsweise dann als konstant angesehen, wenn seine Geschwindigkeit für eine längere Zeit im Wesentlichen 0 ist. Es kann im Sinne der Erfindung beispielsweise bevorzugt sein, dass eine solche Zeitspanne Delta t in einem Bereich von 50 bis 500 ms liegt. Als besonders geeignet zur Feststellung, dass die Position des Gegenstands konstant ist, hat sich eine Zeitspanne von Delta t = 300 ms gezeigt. Die Formulierung, dass eine «Geschwindigkeit im Wesentlichen 0» ist, bedeutet im Sinne der Erfindung bevorzugt, dass die Geschwindigkeit des angehängten Gegenstandes kleiner als 10 mm/s ist, mehr bevorzugt kleiner als 5 mm/s und am meisten bevorzugt bei ca. 3,7 mm/s liegt. Dies entspricht einem Wert für die Motordrehzahl von kleiner als 1 rad/s.

In einem weiteren Aspekt betrifft die Erfindung ein System, wobei das System ein elektronisches Modul mit einer Energiequelle zur Versorgung des Systems mit elektrischer Energie, einer Vorrichtung zum Aufwickeln des Zugseils, einem Motor zum Antrieb der Vorrichtung zum Aufwickeln des Zugseils und einer Steuereinrichtung umfasst. Es ist im Sinne der Erfindung bevorzugt, dass das System, insbesondere seine Steuereinrichtung, dazu eingerichtet ist, einen Ausgleichsvorgang in Bezug auf die Gewichtskraft des Gegenstands durchzuführen. Der Ausgleichsvorgang stellt vorzugsweise einen Steuerungs- und Regelungsprozess in Bezug auf die Position eines an dem Zugseil des Systems befestigten Gegenstand dar, wobei dieser Steuerungs- und Regelungsprozess durch die oben genannten Verfahrensschritte a) - d) bzw. a) - e) beschrieben werden kann. Der Begriff Ausgleichsvorgang betrifft insbesondere den Ausgleich einer Gewichtskraft eines Gegenstands in einem System, wobei der Gegenstand an einem Zugseil des Systems befestigt werden kann. Darüber hinaus kann das elektronische Modul ein Getriebe umfassen, das vorzugsweise dazu eingerichtet ist, hohe Drehmomente des Motors zu ermöglichen.

Es ist im Sinne der Erfindung bevorzugt, dass sich der Motor, das Getriebe und eine Rolle am Ausgang des Getriebes auf dem Rücken, d.h. in einem Rückenbereich des Nutzers, befinden. Die Rolle kann Teil einer Aufwickeleinheit sein oder sie bilden. Die genannten Komponenten können zusammen ein elektronisches Modul bilden, wobei das elektronische Modul darüber hinaus eine Energieversorgung, sowie eine Steuereinrichtung aufweisen kann. Das Zugseil wird vorzugsweise über Führungen an die Vorderseite des Nutzers des Systems geführt. An dieses Zugseil kann der Gegenstand befestigt werden. Bei dem Gegenstand kann es sich beispielsweise um ein Bohrgerät oder um ein Meißelgerät handeln. Es ist im Sinne der Erfindung bevorzugt, dass die Gewichtskraft des Gegenstands von dem System, insbesondere seinem Motor, ausgeglichen werden kann, so dass der Nutzer lediglich ein wenig Kraft zum Bewegen und zur Arbeit mit dem Gegenstand aufwenden muss. Das notwenige Drehmoment M, welches vom Motor aufzubringen ist, um die Gewichtskraft des Gegenstands zu kompensieren, kann wie folgt berechnet werden:

$$M = - (r / i) \cdot m \cdot g$$

wobei m die Masse des Gegenstands, r der Radius der Rolle, g die Gravitationskraft und i die Getriebeübersetzung ist.

Bei den vorgeschlagenen Verfahren wird zunächst eine erste Position des Gegenstands ermittelt. Dies kann beispielsweise dadurch erfolgen, dass der Gegenstand an dem Zugseil befestigt wird, wodurch eine erste Position des Gegenstands festgelegt wird. Es kann aber im Sinne der Erfindung auch bevorzugt sein, dass der Gegenstand zunächst auf einen Erdboden abgelegt, an dem Zugseil befestigt und von dem System in eine erste Position gebracht wird. Es kann darüber hinaus bevorzugt sein, dass ein bereits an dem Zugseil befestigter Gegenstand auf den Erdboden herabgelassen bzw. herabgefahren wird und dort von dem Zugseil gelöst wird. Die erste Position im Sinne der Erfindung ist dann die ursprüngliche Position des Gegenstands vor dem Herunterfahren bzw. Herablassen. Alternativ kann der Gegenstand anschließend auch wieder in seine ursprüngliche oder eine andere Position (zurück-)gefahren werden. In einer weiteren Ausgestaltung kann der Gegenstand, der bereits an dem Zugseil befestigt ist, von dem System bzw. dem Zugseil gelöst werden, wobei die Position, an der das System das Entfernen des Gegenstands registriert, als erste Position im Sinne der Erfindung verwendet wird. Die Detektion, ob ein Gegenstand an dem Zugseil des Systems befestigt ist, erfolgt vorzugsweise dadurch, dass eine Veränderung der Drehzahl erkannt wird, wobei eine solche Drehzahländerung insbesondere durch das Einhängen eines Gegenstands hervorgerufen werden kann. Mit anderen Worten kann die Befestigung des Gegenstands an dem System zu einer Erhöhung der Drehzahl führen, die von dem System erkannt und mit der Information «Gegenstand eingehängt» assoziiert wird.

Die Regelung der Position des Gegenstands umfasst vorzugsweise einen Positionsregelung, welche hart oder weich geschaltet werden kann.

Diese Einstellung der Härte der Regelung kann insbesondere in Abhängigkeit einer Drehzahl des Motors des elektronischen Moduls des Systems erfolgen oder in Abhängigkeit von der einer Ableitung der Motordrehzahl. Für die Umsetzung der Regelung wird insbesondere ein Positionsregler eingesetzt. Der Positionsregler kann beispielsweise als PIDT1-Regler oder PDT1-Regler ausgestaltet sein.

Es ist der alternativen Ausgestaltung der Erfindung bevorzugt, dass eine aktuelle Position des Gegenstands abgespeichert und anschließend als Regelgröße in dem Steuerungs- und Regelungsverfahren verwendet werden kann, wenn die Drehzahl des Motors bzw. ihre Ableitung einen gewissen Wert überschreitet. Dieser Wert wird vorzugsweise auch als «Grenzwert» bzw. «Schaltwert» bezeichnet, wobei dieser Grenz- oder Schaltwert beispielsweise in einem Bereich von 40 bis 1000 rad/s für die Motordrehzahl und 100 bis 4000 rad/s$^2$ für die Ableitung der Drehzahl des Motors liegen kann. Selbstverständlich können auch Werte außerhalb dieser Bereiche vorkommen. Dieser Grenzwert kann für das erste vorgeschlagene Verfahren gleich oder ähnlich sein. Es können für das erste vorgeschlagene Verfahren aber auch andere Werte als Grenzwert in Frage kommen.

Die Regelung auf diese zuvor abgespeicherte aktuelle Position des Gegenstands, die im Sinne der Erfindung auch als «erste Position» und mit dem Bezugszeichen «X» bezeichnet wird, wird insbesondere dann angewendet, wenn der Gegenstand durch einen Nutzer des Systems an dem Zugseil befestigt wird. Vorteilhafterweise wird mit der Erfindung in dieser Ausgestaltung der Erfindung erreicht, dass das Gewicht bzw. die Gewichtskraft des Gegenstands besonders gut ausbalanciert werden kann.

Darüber hinaus können im Kontext der vorliegenden Erfindung weitere Möglichkeiten bzw. Modi zur Aufnahme des Gegenstands vorgesehen sein. Beispielsweise kann der Gegenstand, dessen Gewicht von dem vorgeschlagenen System und mit dem vorgeschlagenen Verfahren ausgeglichen werden soll, liegend von einem Untergrund aufgenommen werden. Mit anderen Worten wird der Gegenstand in diesem ersten Modus auf einen Untergrund, wie zum Beispiel dem Erdboden, abgelegt. Der Gegenstand kann dann, beispielsweise unter Verwendung einer Aufnahme- oder Aufhängevorrichtung an dem Zugseil befestigt und in eine bestimmte Höhe angehoben werden. Der Hubvorgang kann beispielsweise unter Verwendung eines Eingabemittel an dem System gestartet werden. Beispielsweise können Druck-Knöpfe, Schalter oder Potentiometer verwendet werden, um das Anheben des Gegenstands auf eine bestimmte Höhe in Gang zu setzen. Die Verwendung eines Potentiometers ist insbesondere dann bevorzugt, wenn eine variable Hub- oder Hebegeschwindigkeit gewünscht wird.

In einer Ausgestaltung der Erfindung kann der Gegenstand, der in dieser Ausführung der Erfindung bereits am Zugseil befestigt vorliegt, in eine Raumrichtung nach unten, insbesondere in Richtung des Erdbodens, bewegt werden. Es ist im Sinne dieser Ausgestaltung der Erfindung insbesondere bevorzugt, dass der Gegenstand bis auf den Erdboden herabgelassen und dann abgehängt wird.

Es kann im Sinne der Erfindung auch bevorzugt sein, dass der Nutzer des vorgeschlagenen Systems den Gegenstand von dem Zugseil löst und auf diese Weise den Gegenstand aus dem System entfernt. In dieser Ausgestaltung der Erfindung ist es bevorzugt, dass die Aufnahmeoder Aufhängevorrichtung bzw. das Zugseil an der Position verbleibt, die sie/es bei Entfernung des Gegenstands eingenommen hatte, damit diese Position der Aufnahme- oder Aufhängevorrichtung bzw. des Zugseils als Regelgröße für das vorgeschlagene Ausgleichsverfahren verwendet werden kann.

Wenn die Drehzahl des Motors und/oder ihre Ableitung für eine gewisse Zeit einen Grenzwert unterschreitet, wird der Stromsollwert als Regelgröße in dem System hinterlegt. Es ist im Sinne der Erfindung bevorzugt, dass der Grenz- oder Schaltwert vor Inbetriebnahme des Systems festgelegt wurde. Er kann beispielsweise in dem System hinterlegt sein. Diese Hinterlegung kann beispielsweise in der Steuereinrichtung des Systems erfolgen. Es können in dem System auch Speichermittel für die Hinterlegung der ersten Position des Gegenstands vorgesehen sein. Ferner können Lookup-Tabellen oder ähnliche Vergleichsmittel zum Einsatz kommen. Es ist im Sinne der Erfindung bevorzugt, dass die Grenz- oder Schaltwerte in dem System hinterlegt sind.

Die Formulierung, dass die Position eines Gegenstands «als Regelgröße» verwendet wird, stellt für den Fachmann keinen unklaren Begriff dar, weil der Fachmann weiß, dass damit eine Regelung auf diese Position gemeint ist. Sobald der Regelvorgang abgeschlossen ist, wird der dazu notwendige Strom bzw. das notwenige Drehmoment des Motors gespeichert. Diese Verfahrensschritte werden im Sinne der Erfindung als «Hinterlegung eines für die Ausbalancierung des angehängten Gerätes erforderlichen Stromwerts I_X in dem System» oder «Hinterlegung eines für die Ausbalancierung des angehängten Gerätes erforderlichen Drehmoments M_X in dem System» bezeichnet. Bei dem für die Aufrechterhaltung der ersten Position erforderlichen Stromwerts I_X handelt es sich vorzugsweise um den Ausgang des Positionsreglers bzw. um die von ihm ausgegebenen Daten und Meßwerte. Der abgespeicherte Strom bzw. das abgespeicherte Drehmoment stellen vorzugsweise die Werte dar, die für das System erforderlich sind, um den angehängten Gegenstand auszubalancieren. Der abgespeicherte Stromwert I_X kann beispielsweise dem Stromsollwert des ersten vorgeschlagenen Verfahrens entsprechen.

Es ist im Sinne der Erfindung bevorzugt, dass der Positionsregler dazu eingerichtet ist, eine Bewegung des Gegenstands nach oben oder nach unten durch einen Nutzer zu zulassen. Es ist im Sinne der Erfindung bevorzugt, dass bei einer harten Positionsreglung der Regler mit der Anforderung eines höheren oder kleineren Drehmomentes oder eines höheren und niedrigeren Stroms reagiert, wenn der Benutzer versucht, das angehängte Gerät nach unten oder oben zu bewegen. Diese Reaktion erfolgt vorzugsweise zeitnah bzw. sofort, nachdem das System die Bewegung des Gegenstands detektiert hat. Vorteilhafterweise wird die zusätzlich Kraft des Benutzers ausgeglichen und der Gegenstand, der an dem Zugseil des Systems eingehängt vorliegt, bleibt an Ort und Stelle. Bei einer weichen Positionsreglung wird diese Anforderung eines höheren oder kleineren Drehmoments proportional oder integral rückgekoppelt und ändert damit den Sollwert für die Position.

Es ist im Sinne der Erfindung bevorzugt, dass der geänderte Stromwert als DELTA_I und das geänderte Drehmoment als DELTA_M bezeichnet wird, wobei die jeweilige Differenz zwischen geänderten Wert und Ausgangswert informationstechnologisch weiterverarbeitet werden kann. Es ist im Sinne der Erfindung ganz besonders bevorzugt, dass der in Verfahrensschritt d) hinterlegte Stromwert I_X bzw. der in Verfahrensschritt d) hinterlegte Wert M_X für das Drehmoment von dem jeweiligen Wert DELTA_I bzw. DELTA_M abgezogen wird, wobei die jeweilige Differenz integriert, gedämpft integriert und/oder PI-verstärkt werden kann. Dadurch kann vorzugsweise eine sehr weiche Positionsregelung bereitgestellt werden, die es ermöglicht, dass der Nutzer des vorgeschlagenen Systems lediglich gegen einen sehr geringen Widerstand bei der Arbeit mit dem ausbalancierten Gegenstand arbeiten muss. Mit anderen Worten kann die Kraft, die der Nutzer bei der Arbeit mit dem Gegenstand, dessen Gewicht von dem vorgeschlagenen System ausgeglichen werden soll, aufbringen muss, deutlich reduziert werden. Tests haben gezeigt, dass die vom Nutzer aufzubringende Kraft praktisch bis auf 0 reduziert werden kann. Das bedeutet im Sinne der Erfindung bevorzugt, dass der Nutzer lediglich die Kraft aufbringen muss, die für die Arbeit der mit Werkzeugmaschine erforderlich ist, nicht aber eine Kraft, um die Werkzeugmaschine zu halten. Es ist im Sinne der Erfindung bevorzugt, dass eine Größe dieses Widerstands mit Hilfe einer Verstärkung bzw. einer Verstärkungsregelung eingestellt werden kann, wobei die Verstärkung bzw. die Verstärkungsregelung dem Integrator vorgeschalter werden kann. Es ist im Sinne der Erfindung bevorzugt, dass eine Differenz zwischen dem geänderten Stromwert DELTA_I und dem hinterlegten Stromwert I_X integriert wird, wobei dadurch der Sollwert für die Position korrigiert werden kann. Die Integration kann vorzugsweise durch den Integrator erfolgen. Mit anderen Worten kann der Integrator dazu eingerichtet sein, eine Differenz zwischen dem geänderten Stromwert DELTA_I und dem hinterlegten Stromwert I_X zu inegrieren, wodurch eine Korrektur des Positions-Sollwerts erhalten werden kann.

In einem Ausführungsbeispiel der Erfindung wird der Gegenstand vom Nutzer des Systems an dessen Zugseil befestigt, wobei sich das System dabei vorzugsweise in einem reset-Zustand befindet. Sobald sich der Gegenstand auf eine fixe Position eingependelt hat, wechselt das System in den Zustand der schwachen bzw. weichen Positionsregelung. Diese fixe Position des eingependelten Gegenstands wird bevorzugt auch als «erste Position X» bezeichnet. Diese erste Position X des Gegenstands korrespondiert vorzugsweise mit einem gewissen Stromwert, welcher abhängig vom Gewicht des angehängten Gegenstands ist. Es ist im Sinne der Erfindung bevorzugt, dass der aktuelle Strom- bzw. Drehmomentwert bei Eintritt in den Zustand der schwachen bzw. weichen Positionsregelung gespeichert und an den Integrator weitergeleitet wird. Wenn der Nutzer des vorgeschlagenen Systems ein Gegenstand an das Zugseil einhängt, kann als Folge darauf die Drehzahl w_MOTOR des Motors bzw. ihre Ableitung div_w_MOTOR schnell ansteigen, wobei das System vorzugsweise dazu eingerichtet ist, einen Anstieg bzw. eine Änderung der Motordrehzahl bzw. der Ableitung der Motordrehzahl zu erkennen und in einen Zustand «Positionssteuerung» zu wechseln. Die Erkennung erfolgt vorzugsweise durch einen Vergleich mit Referenzwerten, die zuvor bei Versuchen ermittelt wurden. Beim Eintritt in diesen Zustand wird die aktuelle Position des Gegenstands gemessen und in der Folge auf diese geregelt. Es ist im Sinne der Erfindung bevorzugt, dass einige Abtastschritte durchgeführt werden, wenn die Drehzahl w_MOTOR des Motors unter einen bestimmten, sehr kleinen Wert fällt. Dieser sehr kleine Wert kann beispielsweise in einem Bereich von beispielsweise 0 bis 0,1 rad/s liegen. Anschließend kann das System in den Zustand der schwachen bzw. weichen Positionsregelung zurückkehren, wobei die Abtastschritte beispielsweise eine Länge von 1 Millisekunde (ms) haben können. Es ist im Sinne der Erfindung bevorzugt, dass 10 bis 300 Abtastschritte durchgeführt werden. Es ist im Sinne der Erfindung bevorzugt, dass während der Abtastschritte abgewartet wird, ob sich die Drehzahl w_MOTOR des Motors auf dem sehr niedrigen Niveau stabilisiert. Wenn dies der Fall ist, folgt der Wechsel in den Zustand der schwachen bzw. weichen Positionsregelung. Vorzugsweise ist der Wert der Motordrehzahl während der beispielsweise zehn Abtastschritte stets kleiner als ein Grenzwert, der zum Beispiel bei 0,1 rad/s liegen kann.

Wenn das vorgeschlagene Verfahren ein Herablassen bzw. Hinausziehen des Gegenstands umfasst, ist es im Sinne der Erfindung bevorzugt, dass das System einen Zustand «pull-down» oder «pull_up» vorliegen kann, wobei ein Positionssollwert in diesen Zuständen im Wesentlichen kontinuierlich verändert werden kann. Der Begriff der «im Wesentlichen kontinuierlichen Veränderung» stellt für den Fachmann keinen unklaren Begriff dar, weil er weiß, dass damit beispielsweise Änderungsraten bzw. Änderungsschritte in einem Bereich von 0,05 rad/ms gemeint sind. Dadurch wird es vorteilhafterweise ermöglicht, dass der Gegenstand angehoben oder herabgelassen werden kann. Sobald das Herab- bzw. Hinauffahren des Gegenstands durch den Nutzer beendet wird, ist es im Sinne der Erfindung bevorzugt, dass erneut das Erreichen eines kleinen Werts für die Motordrehzahl w_MOTOR bzw. eine gewisse Anzahl von Abtastschritten abgewartet wird, bis eine Rückkehr in den Zustand der schwachen bzw. weichen Positionsregelung erfolgt. Bei dieser Ausgestaltung der Erfindung hilft der Positionsregler dem Nutzer des Systems bei einem Abbremsen einer Bewegung des Gegenstands, wobei der Nutzer gegen einen leichten, bevorzugt einstellbaren Widerstand des Gegenstand anarbeiten muss. Diese Ausgestaltung der Erfindung ist besonders bevorzugt, wenn der Gegenstand von einem Untergrund aufgehoben werden soll, wobei das Einhängen insbesondere dann erfolgt, während der Gegenstand noch auf dem Untergrund liegt. Sie kann auch in solchen Fällen eingesetzt werden, in denen der Gegenstand auf einen Untergrund herabgelassen werden soll, um dort abgehängt zu werden.

Es ist im Sinne der Erfindung bevorzugt, dass die Positionsregelung im Wesentlichen kontinuierlich durchgeführt wird, während mit dem Gegenstand gearbeitet wird bzw. wenn der Gegenstand an dem Zugseil des Systems befestigt ist. Dazu werden vorzugsweise die Daten, die beim Ausgleichsvorgang ermittelt werden, verwendet, um die Gewichtskraft des Gegenstands zu kompensieren. Ein neuer Ausgleichsvorgang findet vorzugsweise dann statt, wenn ein anderer Gegenstand an dem Zugseil des Systems befestigt wird oder der ursprüngliche Gegenstand abgehängt und wieder eingehängt wird, beispielsweise bedingt durch einen Werkzeugwechsel an dem Gegenstand.

Es ist im Sinne der Erfindung bevorzugt, dass das Getriebe des Systems, das insbesondere eine Übersetzung zwischen 2 und 15 und bevorzugt zwischen 4 und 12 aufweist. Darüber hinaus kann das Getriebe an seinem Ausgang eine Rolle aufweisen, wobei die Rolle einen Durchmesser in einem Bereich von 10 bis 200 mm aufweist, bevorzugt in einem Bereich von 20 bis 150 mm und besonders bevorzug in einem Bereich von 40 bis 120 mm. Tests haben gezeigt, dass eine Kombination aus einer Getriebeübersetzung in einem Bereich von 4 bis 12 und einem Rollendurchmessen von 40 bis 120 mm einen guten Kompromiss darstellen, damit der Motor des Systems zwar in der Lage ist, ein ausreichend großes Drehmoment zu erzeugen, auf der anderen Seite aber kompakt ausgebildet sein kann, um in einem körpergetragenen Ausgleichssystem verwendet zu werden.

Es ist im Sinne der Erfindung bevorzugt, dass der Motor ein Außenläufermotor ist. Vorteilhafterweise können durch die Verwendung eines Außenläufermotors hohe Drehmomente bei kleinen Drehzahlen erreicht werden.

Darüber hinaus ist es im Sinne der Erfindung bevorzugt, dass der Motor eine Polzahl aufweist, die größer als 6 ist. Dadurch kann ein kontinuierlich hohes Drehmoment bereitgestellt werden.

*Kompensation von Bewegungen des Nutzers:*

Es ist im Sinne der Erfindung bevorzugt, dass aufgrund von Bewegungen des Nutzers Kräfte auf den Gegenstand einwirken, wobei diese Kräfte und ihre Auswirkungen auf die Gewichtskraft des Gegenstands durch positive oder negative Änderungen des Drehmoments des Motors des Systems ausgeglichen werden können. Der Begriff «positive Änderung des Drehmoments» wird im Sinne der Erfindung bevorzugt als eine Erhöhung des Drehmoments verstanden, während der Begriff «negative Änderung des Drehmoments» im Sinne der Erfindung bevorzugt als eine Verringerung des Drehmoments verstanden wird. Mit anderen Worten können Änderungen des Drehmoments verwendet werden, um Bewegungen des Nutzers, der über das System mit dem Gegenstand verbunden ist, auszugleichen. Dadurch können insbesondere unerwünschte unkontrollierte Bewegungen des Gegenstands verhindert werden, die ggf. ein Risiko für den Systemnutzer darstellen können.

Bewegungen des Nutzers, die mit Hilfe des vorgeschlagenen Systems ausgeglichen werden können, sind insbesondere die Folgenden:

- Auf- und Abbewegung durch eine Fortbewegung des Nutzers, insbesondere Laufen,

- Beugebewegungen des Nutzers in eine Raumrichtung nach vorne oder nach hinten,

- Beugebewegungen des Nutzers in seitliche Raumrichtungen («seitwärts»),

- Drehbewegungen des Nutzers um eine vertikale Körperachse.

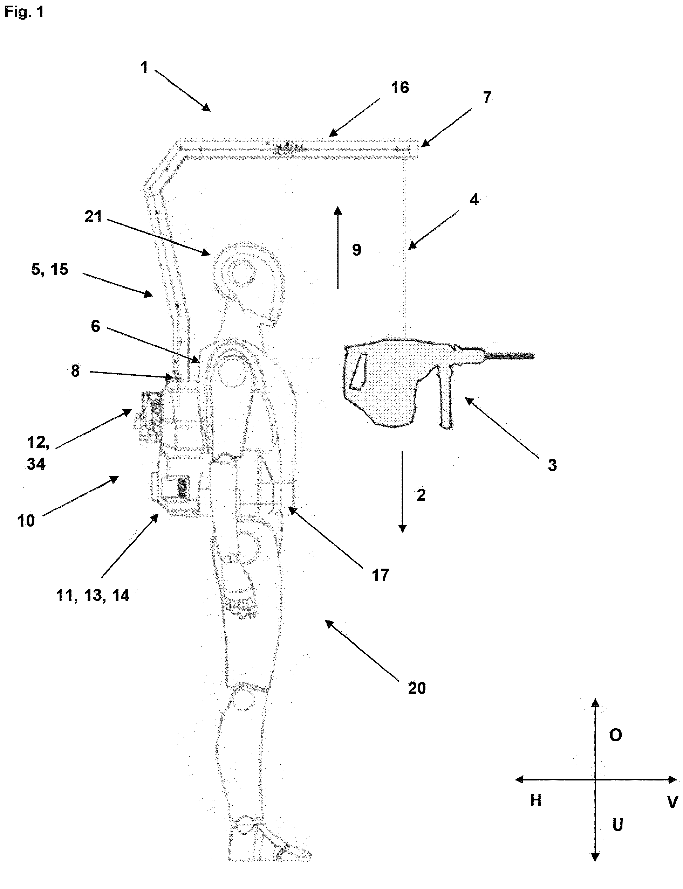

Es ist im Sinne der Erfindung bevorzugt, dass insbesondere die Auf- und Abbewegung durch eine Fortbewegung des Nutzers, insbesondere Laufen, und die Beugebewegungen des Nutzers in eine Raumrichtung nach vorne oder nach hinten durch das vorgeschlagene System und mit dem vorgeschlagenen Verfahren ausgeglichen werden können. Dies geschieht vorzugsweise durch zusätzliche Beschleunigungen, die auf den Gegenstand wirken und seine Gewichtskraft beeinflussen. Mit anderen Worten kann der Gegenstand mit zusätzlichen Beschleunigungen beaufschlagt werden, um Bewegungen des Nutzers auszugleichen. Vorzugsweise wirken diese zusätzlichen Beschleunigungen den Bewegungen des Nutzers entgegen, d.h. sie sind dazu geeignet, die Bewegungen des Nutzers zu kompensieren. Es ist im Sinne der Erfindung bevorzugt, dass diese zusätzlichen Beschleunigungen durch positive und negative Änderungen des Drehmoments kompensiert werden können. Vorzugsweise weist das vorgeschlagene System Beschleunigungssensoren auf, die dazu eingerichtet sind, diese zusätzlichen Beschleunigungen zu ermitteln. Es ist im Sinne der Erfindung bevorzugt, dass Beschleunigungssensoren verwendet werden, die die Beschleunigung vor allem in der Z-Achse messen können. Eine Bewegung des Gegenstands entlang der Z-Achse entspricht im Sinne der Erfindung einer Auf- und Abbewegung des Gegenstands. Diese Achse ist beispielsweise in Fig. 1 als O- bzw. U-Achse dargestellt. Vorzugsweise sind die Beschleunigungssensoren darüber hinaus dazu eingerichtet, auch Bewegungen des Gegenstands in der X- und/oder Y-Achse zu erfassen. Diese Bewegungen entsprechen seitlichen Bewegungen des Gegenstands oder Bewegungen des Gegenstands nach vorne oder hinten. Ferner können Drehratensensoren eingesetzt werden, die Beugebewegungen erfassen können. Vorzugsweise sind die Drehratensensoren dazu eingerichtet, solche Beugebewegungen in allen drei Raumrichtungen X, Y und Z zu detektieren.

Es ist im Sinne der Erfindung bevorzugt, dass der mindestens eine Sensor zur Erfassung der Beschleunigung in einer vertikalen Raumrichtung angeordnet vorliegt. Wenn der Beschleunigungssensor nicht exakt in vertikaler Richtung angeordnet vorliegt, ist es im Sinne der Erfindung bevorzugt, dass ein Korrekturfaktor verwendet wird, um diese Abweichung von der vertikalen Raumrichtung auszugleichen. In diesem Fall werden vorzugsweise zwei Sensoren verwendet. Vorzugsweise kann der Korrekturfaktor in Abhängigkeit von dem Neigungswinkel beta der Beugebewegung des Nutzers nach vorne oder nach hinten bestimmt werden. Die vertikale Raumrichtung entspricht vorzugsweise einer Bewegung des Gegenstands entlang der Z-Achse (vgl. Fig. 1: O- und U-Achse), d.h. vorzugsweise einer Auf- und Abbewegung des Gegenstands.

Der Neigungswinkel beta ist vorzugsweise derjenige Winkel, der von einer gedachten vertikalen Achse, die beispielsweise durch den Systemnutzer und im Wesentlichen parallel zu seiner Wirbelsäule verläuft, und dem geneigten Oberkörper des Nutzers eingeschlossen wird. Wenn sich der Nutzer beispielsweise um 20 Grad ausgehend von der üblichen geraden Körperhaltung, die durch die gedachte vertikale Achse dargestellt wird, nach vorne beugt, so beträgt der Neigungswinkel beta 20 Grad. Mit anderen Worten ist es im Sinne der Erfindung bevorzugt, dass die Beugebewegungen des Nutzers in eine Raumrichtung nach vorne oder nach hinten durch einen Neigungswinkel beta beschrieben werden können. Vorzugsweise kann der Neigungswinkel beta durch einen frequenzbasierten Komplementärfilter der Drehraten- und Beschleunigungsmessung erfolgen, wobei die Frequenz vorzugsweise so bestimmt wird, dass sie eine Schrittfrequenz des Nutzers gut dämpft. Tests haben gezeigt, dass die Frequenz bevorzugt in einem Bereich von 0,4 bis 2 Hz liegt, um eine besonders gute Dämpfung der Schrittfrequenz des Nutzers zu erreichen.

Es ist im Sinne der Erfindung ganz besonders bevorzugt, dass Sensoren verwendet werden, die dazu eingerichtet sind, sowohl eine Drehrate, als auch eine Beschleunigung zu erfassen. Der Begriff «Drehrate» ist im Sinne der Erfindung als Beugegeschwindigkeit des Nutzers zu verstehen, d.h. als die Geschwindigkeit, mit der sich der Nutzer nach vorne oder nach hinten beugt.

Durch die Verwendung eines Sensors, der sowohl eine Drehrate, als auch Beschleunigungen erfassen kann, kann insbesondere die unerwünschte Berücksichtigung eines Drifts vermieden werden, die bei Verwendung von reinen Drehratensensoren auftreten kann.

Es ist im Sinne der Erfindung bevorzugt, dass Kräfte, die durch andere Bewegungen des Nutzers hervorgerufen werden, durch ähnliche oder analoge Verfahren ausgeglichen werden können.

*Kompensation realer Kräfte:*

Wenn der Nutzer des Systems mit dem Gegenstand arbeitet, d.h. zum Beispiel meißelt oder ein Loch bohrt, wird ein Teil der Gewichtskraft des Gegenstands von dem Untergrund aufgenommen, der mit dem Gegenstand bearbeitet wird. Diese Kraftaufnahme durch den zu bearbeitenden Untergrund kann dazu führen, dass der Gegenstand nach oben gezogen wird, weil die reduzierte Gewichtskraft des Gegenstands nicht anderweitig kompensiert wird. Ohne entsprechende Gegenmaßnahme würde der Nutzer nun durch eine Kraft nach unten gegen die nach oben wirkende Zugkraft anarbeiten müssen. Dies kann verhindert werden, in dem das System einen Kraftsensor oder einen Drehmomentsensor umfasst, wobei der Kraftsensor dazu eingerichtet ist, die Kraft am Zugseil («Seilkraft») zu erfassen, während der Drehmomentsensor dazu eingerichtet ist, das real wirkende Drehmoment zu erfassen. Der Drehmomentsensor kann vorzugsweise zwischen einer Rolle der Aufwickeleinheit und dem Getriebe des elektronischen Moduls angeordnet vorliegen oder zwischen dem Motor und dem Getriebe. Es ist im Sinne der Erfindung besonders bevorzugt, dass kontaktlos arbeitenden Sensoren verwendet werden.

Es ist im Sinne der Erfindung bevorzugt, dass dem Motor des Systems jeweils soviel Strom eingeprägt wird, wie es für die Kompensation des tatsächlich angreifenden Kraft erforderlich ist. Dabei kann die tatsächlich angreifende Kraft als Differenz der Gewichtskraft des Gegenstands und der vom Untergrund aufgenommenen Kraft bestimmt werden.

*Sicherheit bei Ausfall der Elektronik:*

Es ist im Sinne der Erfindung bevorzugt, dass eine Bremsfunktion vorgesehen, mit der ein unterwünschtes Herabfallen des Gegenstands verhindert werden kann, was passieren kann, wenn es zu einer Unterbrechung der Energieversorgung des elektronischen Moduls des Systems kommt. Die Bremsfunktion kann vorzugsweise dadurch realisiert werden, dass die drei Phasen des Motors des Systems kurzgeschlossen werden. Dieser Kurzschluss der drei Motorphasen wird insbesondere im stromlosen Zustand des Motors durchgeführt. Durch das Kurzschließen kann eine Kurzschlußbremse bereitgestellt werden, die es vorteilhafterweise ermöglicht, dass eine Fallgeschwindigkeit des Gegenstands auf unkritische Werte minimiert wird und höhere Fallgeschwindigkeiten ausgeschlossen werden. Der Kurzschluss der Motorphasen kann insbesondere durch zwei Relais erreicht werden, die in einem stromlosen Zustand des Motors eingeschaltet sind. Eine andere Möglichkeit besteht darin, Halbleiter zu verwenden, die sich ähnlich wie die Relais verhalten.

In einer alternativen Ausgestaltung der Erfindung kann auch eine mechanische Bremse verwendet werden, um ein schnelles Herabfallen des Gegenstands zu verhindern.

Das System stellt insbesondere ein batteriebetriebenes, körpergetragenen Ausgleichs- bzw. Balancing-System dar, bei dem die Gewichtskraft eines Gegenstands durch Erzeugen einer Gegenkraft kompensiert wird, wobei die Gegenkraft durch ein Zugseil übertragen wird.

Bei dem Gegenstand kann es sich insbesondere um ein Werkzeuggerät handeln, mit dem eine Arbeit verrichtet werden soll. Beispielsweise kann es sich um ein Meißelgerät, einen Bohrhammer, ein Befestigungsgerät oder ein ähnlich großes und/oder schweres Gerät handeln, mit dem beispielsweise eine Mauer bearbeitet oder ein Befestigungsgegenstand in eine Mauer oder einen Untergrund hineingetrieben werden soll. Der Fachmann kennt solche Werkzeuggeräte.

Der Gegenstand bzw. das Werkzeuggerät können mit geeigneten Befestigungs- oder Aufnahmevorrichtungen an einem Zugseil des Systems befestigt werden. Es ist im Sinne der Erfindung bevorzugt, dass das Zugseil den Gegenstand mit einer Vorrichtung zum Aufwickeln des Zugseils verbindet, wobei die Vorrichtung zum Aufwickeln des Zugseils vorzugsweise im Bereich der Rückenstruktur des Systems vorgesehen ist. Die Aufwickelvorrichtung ist vorzugsweise dazu eingerichtet, eine effektive Länge des Zugseils zu verlängern oder zu verkürzen. Dies geschieht im Rahmen des Ausgleichsvorgangs, bei dem das Gewicht bzw. die Gewichtskraft des Gegenstands festgestellt und zur Einstellung und Regelung der effektiven Länge des Zugseils verwendet wird. Die Vorrichtung zum Aufwickeln des Zugseils kann somit Zugseil freigeben oder seine Länge verkürzen und auf diese Weise die Gewichtskraft des eingehängten Gegenstands ausgleichen bzw. kompensieren. Dadurch wird der Nutzer des vorgeschlagenen Systems bei der Arbeit mit dem Gegenstand erheblich entlastet, weil er bei Nutzung des Systems lediglich die für die Durchführung der Arbeit erforderliche Kraft aufbringen muss, nicht mehr aber die Kraft zum Halten des Werkzeuggeräts. Mit anderen Worten wird der Ausgleich der Gewichtskraft des Gegenstands vom Nutzer auf das System übertragen, so dass der Systemnutzer davon befreit wird. Bei der Kraft, die für die Durchführung der Arbeit aufgebracht werden muss, kann es sich beispielsweise um eine Presskraft handeln, um einen Vortrieb des Werkzeuggeräts oder seines Werkzeugs in eine Mauer oder einen zu bearbeitenden Untergrund zu bewirken.

Das Zugseil wird in oder an einem Kragarm des Systems in Richtung einer Rückenstruktur geführt. Es ist im Sinne der Erfindung bevorzugt, dass das Zugseil von dem Gegenstand in Richtung eines ersten Endes des Kragarms verläuft, wobei das erste Ende des Kragarms vorzugsweise auch als vorderes Ende des Kragarms bezeichnet werden kann.

In einer bevorzugten Ausgestaltung der Erfindung ist der Kragarm im Wesentlichen L-förmig ausgebildet. Vorzugsweise umfasst der Kragarm einen Rückenabschnitt und einen Kopfabschnitt, wobei der Rückenabschnitt und der Kopfabschnitt im Wesentlichen senkrecht zueinander angeordnet sind. Es ist im Sinne der Erfindung bevorzugt, dass der Rückenabschnitt des Kragarms im Wesentlichen parallel zu einer Wirbelsäule des Systemnutzers verläuft, während der Kopfabschnitt des Kragarms oberhalb oder neben einem Kopf des Nutzers verläuft, im Wesentlichen senkrecht zu dem Rückenabschnitt und/oder der Wirbelsäule des Nutzers. Es ist im Sinne der Erfindung bevorzugt, dass der Kragarm bzw. sein Kopfabschnitt über den Kopf des Nutzers oder neben dem Kopf des Nutzers geführt werden kann. Dadurch kann ein besonders flexibles und vielfältig einsetzbares System bereitgestellt werden. Der Übergangsbereich zwischen Rücken- und Kopfabschnitt des Kragarms kann L-förmig ausgebildet sein, einen Übergangsabschnitt umfassen oder als Gelenk ausgebildet sein. Ein als Übergangsabschnitt ausgebildeter Übergangsbereich zwischen Rücken- und Kopfabschnitt des Kragarms führt zu einer besonders stabilen Struktur des vorgeschlagenen Systems, während ein Gelenk, das im Übergangsbereich zwischen Rücken- und Kopfabschnitt des Kragarms vorgesehen sein kann, eine Klappbarkeit des Systems ermöglicht, wodurch eine Packgröße des zusammengelegten Systems erheblich reduziert werden kann.

Die Begriffe "oben", "unten", "vorne" und "hinten" stellen für den Fachmann im Kontext der vorliegenden Erfindung keine unklaren Begriffe dar, da die Begriffe und die damit verbundenen Raumrichtungen "nach oben", "nach unten", "nach vorne" und "nach hinten" beispielsweise in Figur 1 erläutert werden. Beispielsweise wirkt die Gewichtskraft des Gegenstands in der Regel in eine Raumrichtung "nach unten", d.h. in Richtung des Erdbodens, auf dem der Nutzer des Systems steht. Die Raumrichtung "nach oben" entspricht der Richtung, in die der Gegenstand bewegt wird, wenn die effektive Länge des Zugseils von der Vorrichtung zum Aufwickeln des Zugseils verkürzt wird. Der Gegenstand befindet bei einer üblichen Verwendung des vorgeschlagenen Systems vor dem Nutzer, beispielsweise auf Kopf-, Brust- oder Bauchhöhe. Der Kopfabschnitt des Kragarms stellt in der Regel den höchsten Punkt des Systems da, so dass es in der Sprechweise der Erfindung den oberen Abschluss des Systems bildet. Der Rückenabschnitt des Kragarms bildet den hinteren Bereich des Systems. Im hinteren, unteren Bereich des Systems ist die Rückenstruktur mit dem elektronischen Modul, dem Motor zum Antrieb der Aufwickelvorrichtung und der Steuereinrichtung vorgesehen. Den unteren Abschluss des Systems kann beispielsweise ein Hüftgurt bilden, mit dem das System an dem Nutzer befestigt werden kann. Dieser Hüftgurt bildet im Sinne der Erfindung einen ersten Kontaktbereich, an dem ein physischer Kontakt zwischen den Systemnutzer und dem System besteht. Ein zweiter Kontaktbereich kann von einem Rückenpolster gebildet wird.

Vorzugsweise kann der Kragarm des Systems von der Rückenstruktur aufgenommen werden. Das System umfasst ein elektronisches Modul, wobei das elektronische Modul insbesondere im Bereich der Rückenstruktur des Systems angeordnet vorliegen kann. Das elektronische Modul kann Bestandteil des vorgeschlagenen Systems sein.

Das elektronische Modul umfasst eine Energiequelle zur Versorgung des Systems mit elektrischer Energie. Bei der Energiequelle kann es sich um eine Batterie oder einen Akkumulator («Akku») handeln, wobei der Akku vorzugsweise wieder aufladbar ist. Wenn es sich bei dem Gegenstand, dessen Gewicht mit dem vorgeschlagenen System ausgeglichen wird, um ein batterie- oder akkubetriebenes Werkzeuggerät handelt, ist es im Sinne der Erfindung bevorzugt, dass die Energiequelle ähnlich oder gleich zu der Energiequelle des Werkzeuggeräts ist. Mit anderen Worten ist es im Sinne der Erfindung bevorzugt, wenn für die Energieversorgung des vorgeschlagenen Systems und des Werkzeuggeräts im Wesentlichen gleiche Batterien und Ackus verwendet werden können.

Das elektronische Modul umfasst darüber hinaus eine Vorrichtung zum Aufwickeln des Zugseils, sowie einen Motor zu deren Antrieb. Es ist im Sinne der Erfindung bevorzugt, dass die Vorrichtung zum Aufwickeln des Zugseils in einem Bereich der Rückenstruktur angeordnet ist und das Zugseil unter Verwendung des Motors aufwickelbar ist. Der Motor des vorgeschlagenen Systems ist dazu eingerichtet, ein Drehmoment zu erzeugen, um die Gewichtskraft des Gegenstands auszugleichen.

Der Ausgleichsvorgang findet insbesondere dann statt, wenn ein neuer Gegenstand an dem Zugseil des Systems befestigt wird. Dies kann beispielsweise der Fall sein, wenn ein Werkzeuggerät ausgetauscht wird, weil eine andere Arbeit erledigt werden soll. Im Rahmen des Ausgleichsvorgangs erfolgt eine Regelung auf das statische Gewicht bzw. die Gewichtskraft des Gegenstands, wobei die Regelgröße insbesondere der Stromsollwert ist. Es kann im Sinne der Erfindung allerdings auch bevorzugt sein, dass der Ausgleichsvorgang einen im Wesentlichen kontinuierlich ablaufenden Steuer- und Regelungsprozess darstellt, bei dem insbesondere die Motordrehzahl auf die Drehzahl "null", d.h. einen Stillstand, geregelt wird.

Der Ausgleichsvorgang ist insbesondere als automatischer Ausgleichsvorgang ausgestaltet, bei dem das System vorzugsweise automatisch auf die Gewichtskraft des Gegenstands bzw. seine Änderungen reagiert, indem das Drehmoment am Motor des Systems entsprechend geregelt wird.

Das elektronische Modul umfasst darüber hinaus eine Steuereinrichtung, dazu eingerichtet ist, den Ausgleichsvorgang in Bezug auf die Gewichtskraft des Gegenstands durchzuführen. Im Kontext der Erfindung ist es bevorzugt, dass vor allem die Vorrichtung zum Aufwickeln des Zugseils, der Motor und die Steuervorrichtung mit elektrischer Energie versorgt werden.

Es ist im Sinne der Erfindung bevorzugt, dass bei dem Ausgleichsvorgang eine Gegenkraft für die Gewichtskraft des Gegenstands ermittelt wird, so dass die Gewichtskraft des Gegenstands durch die der Gewichtskraft entgegengerichtete Gegenkraft ausgeglichen bzw. kompensiert wird. Vorzugsweise kann die Gegenkraft unter Verwendung des Zugseils auf den Gegenstand übertragen werden. Dadurch kann einem Nutzer des Systems das Gewicht des Gegenstands «abgenommen» werden, so dass der Nutzer - beispielsweise während der Arbeit mit dem Gegenstand - diesen nicht in einer bestimmten Höhe halten muss, sondern lediglich die Kraft aufbringen muss, die erforderlich ist, um die konkret zu erledigende Arbeit mit dem Gegenstand zu verrichten.

Es ist im Sinne der Erfindung bevorzugt, dass eine Führung des Zugseils mittels Rollen und/ oder eines Bowdenzugs realisiert wird. Der Bowdenzug kann insbesondere ein Bowdenkabel umfassen oder von einem solchen gebildet werden. Es ist im Sinne der Erfindung bevorzugt, dass das Zugseil in oder an dem Kragarm geführt wird und so von dem zu haltenden Gegenstand, dessen Gewicht kompensiert werden soll, zu der Aufwickelvorrichtung führt.

Es ist im Sinne der Erfindung bevorzugt, dass die Rückenstruktur einen ersten Kontaktbereich und einen zweiten Kontaktbereich umfasst, wobei zumindest in den Kontaktbereichen ein Kontakt zwischen dem Nutzer des Systems und dem System gegeben ist. Vorzugsweise kann der erste Kontaktbereich als Hüftgurt ausgebildet sein, während der zweite Kontaktbereich als Rückenpolster ausgebildet sein kann. Es ist im Sinne der Erfindung bevorzugt, dass das Gewicht das Systems durch die Verwendung eines Hüftgurts als ersten Kontaktbereich optimal auf einen stabilen Körperbereich des Systemnutzers übertragen werden kann. Mit anderen Worten wird ein großer Anteil des Gewichts des Systems in den Hüftgurt eingetragen und durch diesen auf einen stabilen Körperbereich des Nutzers verteilt. Dadurch kann der Tragekomfort des vorgeschlagenen Systems deutlich erhöht werden.

Vorzugsweise ist ein Abstand zwischen dem ersten Kontaktbereich und dem zweiten Kontaktbereich einstellbar ausgebildet, um das System an den Nutzer anzupassen und ein durch den Gegenstand hervorgerufenes Kippmoment auszugleichen. Dieses Kippmoment wirkt vorzugsweise in die Raumrichtung "nach vorne", so dass der Nutzer des Systems bei dessen Verwendung und insbesondere, wenn ein schwerer Gegenstand an dem Zugseil befestigt ist, in die Raumrichtung "nach vorne" gezogen werden kann. Um dieses Kippmoment optimal auszugleichen, ist es im Sinne der Erfindung bevorzugt, dass der Abstand zwischen dem ersten Kontaktbereich und dem zweiten Kontaktbereich der Rückenstruktur des Systems möglichst groß gewählt wird, um eine gute Hebelwirkung zu erreichen. Dies wird insbesondere durch die Einstellbarkeit des Abstands zwischen dem ersten Kontaktbereich und dem zweiten Kontaktbereich der Rückenstruktur ermöglicht.

Insbesondere weist das vorgeschlagene System einen Linearführung auf, über die der Abstand zwischen Rückenpolster und Hüftgurt eingestellt werden kann. Damit kann der Nutzer, angepasst an seine Körpergröße, einen jeweils möglichen maximalen Abstand zwischen dem ersten und dem zweiten Kontaktbereich der Rückenstruktur einstellen. Die Linearführung leistet somit einen wesentlichen Beitrag, um das Kippmoment, das von dem Gegenstand, dessen Gewicht durch das System ausgeglichen werden soll, zu kompensieren.

Es ist im Sinne der Erfindung bevorzugt, dass das System eine Strebe aufweist, um ein durch den Gegenstand hervorgerufenes Kippmoment in einen ersten Kontaktbereich des Systems einzuleiten. Vorzugsweise wird das Kippmoment insbesondere in den Hüftgurt des Systems geleitet, wo es auf einen stabilen Körperbereich des Nutzers verteilt wird. Durch die Vorsehung der Strebe kann die Ableitung des Kippmoments weiter verbessert werden. Es ist im Sinne der Erfindung bevorzugt, dass die Strebe die Rückenstruktur mit dem Hüftgurt verbindet. Für eine verbesserte Krafteinleitung in den Hüftgurt kann die Strebe mit einem Biegeblech versteift werden.

Es ist im Sinne der Erfindung bevorzugt, dass der Kragarm klappbar ausgebildet ist. Dazu kann der Kragarm mindestens ein Gelenk umfassen.

In einem weiteren Aspekt betrifft die Erfindung ein elektronisches Modul zum Ausgleich einer Gewichtskraft eines Gegenstands. Die für das vorgeschlagene System und seine Komponenten eingeführten Begriffe, Definitionen und technischen Vorteile gelten vorzugsweise für das elektronische Modul analog. Im Kontext des elektronischen Moduls wird der Gegenstand, dessen Gewichtskraft ausgeglichen werden soll, mit einem Zugseil an dem Modul befestigt. Das elektronische Modul weist die folgenden Komponenten zum Ausgleich einer Gewichtskraft eines Gegenstands auf:

- eine Energiequelle zur Versorgung des Systems mit elektrischer Energie,
- eine Vorrichtung zum Aufwickeln eines Zugseils,
- einen Motor zum Antrieb der Vorrichtung zum Aufwickeln eines Zugseils und
- eine Steuereinrichtung umfasst,

wobei die Steuereinrichtung dazu eingerichtet ist, einen Ausgleichsvorgang in Bezug auf die Gewichtskraft des Gegenstands durchzuführen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. In den Figuren sind gleiche und gleichartige Komponenten mit gleichen Bezugszeichen beziffert. Es zeigen:

Fig. 1    Ansicht einer bevorzugten Ausgestaltung des vorgeschlagenen Systems

Fig. 2    Ansicht einer bevorzugten Ausgestaltung des vorgeschlagenen Systems mit längeneinstellbarer Rückenstruktur

**Ausführungsbeispiele und Figurenbeschreibung:**

Figur 1 zeigt eine bevorzugte Ausgestaltung des vorgeschlagenen Systems 1, das von einem Nutzer 20 getragen wird. Das System 1 umfasst einen Kragarm 5, der in dem in Fig. 1 abgebildeten Beispiel der Erfindung oberhalb des Kopfes 21 des Nutzers 20 verläuft. Der Kragarm 5 kann Abschnitte aufweisen, die als Rückenabschnitt 15, Kopfabschnitt 16 und Übergangsabschnitt bezeichnet werden. Der Rückenabschnitt 15 ist in einem Rück- oder hinterem Bereich des Systems 1 angeordnet und verläuft im Wesentlichen parallel zu einer Wirbelsäule des Nutzers 20. Der Kopfabschnitt 16 verläuft im Wesentlichen senkrecht zu dem Rückenabschnitt 15 des Kragarms 5, so dass Rückenabschnitt 15 und Kopfabschnitt 16 einen im Wesentlichen rechten Winkel einschließen. Der Kragarm 5 kann L-förmig ausgebildet sein oder einen Übergangsbereich aufweisen, der einen schräg zwischen dem Rückenabschnitt 15 und dem Kopfabschnitt 16 angeordneten Übergangsabschnitt aufweist. Der Kragarm 5 weist ein vorderes oder ersten Ende 7, sowie ein zweites oder hinteres Ende 8 auf, welches in die Rückenstruktur 6 des Systems 1 einmündet. Mit der Rückenstruktur 6 wird es ermöglicht, dass das System 1 von dem Nutzer 20 auf dem Rücken getragen wird. Im Rückenbereich des Nutzers 20 ist ein elektronisches Modul 10 vorgesehen, dass verschiedene Komponenten des Systems 1 beinhaltet. Insbesondere sind eine Energiequelle 11, eine Vorrichtung 12 zum Aufwickeln eines Zugseils 4, eine Steuereinrichtung 14 und ein Motor 13 in dem elektronischen Modul 10 untergebracht. Die Vorrichtung 12 zum Aufwickeln des Zugseils 4 kann eine Rolle umfassen, die am Ausgang eines Getriebes 34 angeordnet vorliegt. Das Getriebe 34 kann ebenfalls Bestandteil des elektronischen Moduls 10 sein. Die Rückenstruktur 6 bzw. das elektronische Modul 10 können mit einem ersten Kontaktbereich 17 und einem zweiten Kontaktbereich 18 an dem Nutzer 20 befestigt werden. Der erste Kontaktbereich 17 kann als Hüftgurt ausgebildet sein, während der zweite Kontaktbereich 18 vorzugsweise als Rückenpolster ausgebildet ist. An dem Zugseil 4 kann ein Gegenstand 3 befestigt werden, der eine Gewichtskraft 2 aufweist. Bei der Gewichtskraft 2 handelt es sich vorzugsweise um das Gewicht des Gegenstands 3, wobei die Gewichtskraft 2 in Richtung des Erdbodens zeigt. Diese Richtung wird im Sinne der Erfindung bevorzugt als Raumrichtung «nach unten U» bezeichnet. Die anderen Raumrichtungen «nach oben O», «nach vorne V» oder «nach hinten H» sind ebenfalls in Fig. 1 dargestellt. Der Pfeil nach unten, der mit dem Bezugszeichen 2 versehen ist, symbolisiert die Gewichtskraft 2 des Gegenstand 3 und gibt ihre Richtung an. Der Gegenstand 3 kann vorzugsweise als Werkzeuggerät ausgebildet sein und über das Zugseil 4 an dem System 1 befestigt werden. Dazu können einfache Befestigungsmittel, wie Karabinerhaken, oder spezielle Befestigungsmittel oder Aufnahmevorrichtungen verwendet werden.

Das Zugseil 4 führt von dem Gegenstand 3 in Richtung des Kragarms 5 und wird dann in oder an dem Kragarm 5 in Richtung der Rückenstruktur 6 bzw. des elektronischen Moduls 10 geführt. In dem elektronischen Modul 10 befindet sich die Aufwickelvorrichtung 12, mit der das Zugseil 4 aufgewickelt werden kann. Dadurch kann die effektive Länge des Zugseils 4 verlängert oder verkürzt werden. Insbesondere kann die Länge des Zugseils 4 an die Gewichtskraft 2 des Gegenstands 3 angepasst werden, wobei die Gewichtskraft 2 des Gegenstands 3 in einem Ausgleichsvorgang bestimmt wird. Die Aufwickelvorrichtung 12 wird von einem Motor 13 angetrieben, der ebenfalls in dem elektronischen Modul 10 angeordnet vorliegen kann. Es ist im Sinne der Erfindung bevorzugt, dass der Ausgleichsvorgang einen Regel- und Steuerprozess darstellt, dessen Ziel es ist, dass der Motor 13 im Stillstand ist. Mit anderen Worten wird der Motor 13 durch den Ausgleichsvorgang auf eine Drehzahl null geregelt. Das vorgeschlagene System 1 ermöglicht mit dem Ausgleichsvorgang, dass eine Gewichtskraft 2 des Gegenstands 3 kompensiert wird, so dass das vorgeschlagene System 1 bevorzugt auch als Balancing System bezeichnet werden kann. Die Kompensation der Gewichtskraft 2 geschieht vorzugsweise durch ein Zusammenspiel von Aufwickelvorrichtung 12, Motor 13 und Steuereinrichtung 14, wobei die genannten Komponenten des Systems 1 von der Energiequelle 11 mit elektrischer Energie versorgt werden. Vorzugsweise handelt es sich bei der Energiequelle 11 um eine Batterie oder um einen Akku. Die Kompensation der Gewichtskraft 2 des Gegenstands 3 erfolgt insbesondere durch eine Gegenkraft 9, die auf den Gegenstand 3 ausgeübt und mittels des Zugseils 4 auf den Gegenstand 3 übertragen wird. Mit anderen Worten gleicht die Gegenkraft 9 die Gewichtskraft 2 des Gegenstands 3 aus und sorgt somit dafür, dass der Nutzer 20 des Systems 1 den Gegenstandstand 3 nicht entgegen der Schwerkraft halten muss, sondern lediglich die zur Arbeit mit den Gegenstand 3 erforderlich Kraft aufbringen muss. Dadurch kann das System 1 die Arbeit mit dem Gegenstand 3 für den Nutzer 20 wesentlich erleichtern. Die Gegenkraft 9 ist in den Figuren mit einem Pfeil in die Raumrichtung «nach oben» und dem Bezugszeichen 9 markiert.

Ein Ausgleichsvorgang findet insbesondere dann statt, wenn ein (neuer) Gegenstand 3 an dem Zugseil 4 befestig wird oder bei Austausch des Gegenstands 3. Insbesondere kann die Kompensation der Gewichtskraft 2 des Gegenstands 3 statisch auf dessen Gewicht geregelt werden. Es kann aber im Sinne der Erfindung auch bevorzugt sein, dass der Ausgleichsvorgang kontinuierlich stattfindet und dass die Gegenkraft 9 dynamisch an Änderungen der Gewichtskraft 2, die bei der Arbeit mit dem Gegenstand 3 kurzfristig auftreten können, angepasst wird.

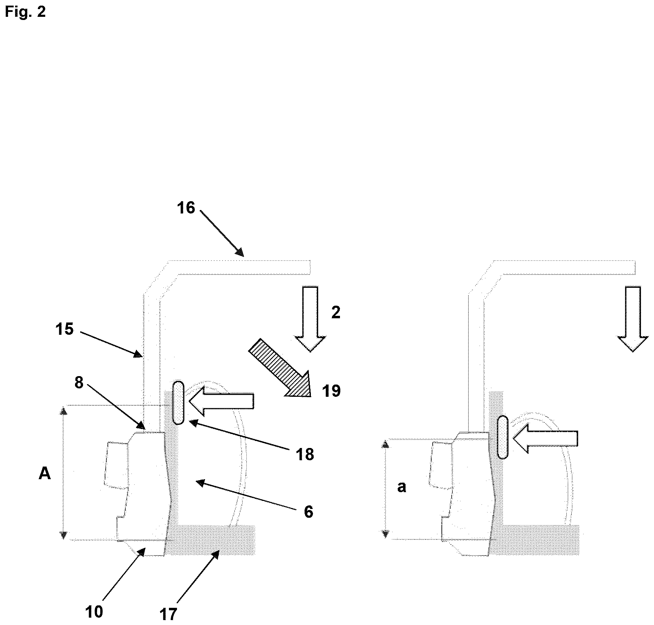

Fig. 2 zeigt eine bevorzugte Ausgestaltung des vorgeschlagenen Systems 1 mit einer längeneinstellbaren Rückenstruktur 6. Insbesondere kann bei dem in Fig. 2 dargestellten Ausführungsbeispiel der Erfindung ein Abstand A zwischen dem ersten Kontaktbereich 17 und dem zweiten Kontaktbereich 18 der Rückenstruktur 6 eingestellt werden. Es ist im Sinne der Erfindung ganz besonders bevorzugt, dass der Abstand A zwischen einem Hüftgurt 17 und einem Rückenpolster 18 der Rückenstruktur 6 eingestellt werden kann. Durch die Einstellbarkeit des Abstandes A zwischen Hüftgurt 17 und Rückenpolster 18 kann ein Kippmoment 19, das von dem Gegenstand 3 erzeugt wird, kompensiert werden. Das Kippmoment 19 ist in Fig. 2 mit einem schraffierten Pfeil und dem Bezugszeichen 19 dargestellt. Das Kippmoment 19 entsteht durch die Gewichtskraft 2 des Gegenstands 3, der das System 1 in die Raumrichtung nach unten U zieht. Dadurch wirkt insgesamt ein Kippmoment 19, das nach unten und nach vorne wirkt und insbesondere den Kragarm 5 des Systems 1 in diese Richtung zieht. Es hat sich gezeigt, dass ein besonders großer Abstand A zwischen dem Hüftgurt 17 und dem Rückenpolster 18 als Kontaktflächen zwischen Rückenstruktur 6 und Nutzer 20 dieses Kippmoment 19 besonders wirksam ausgleicht, da auf diese Weise besonders gute Hebelverhältnisse herrschen. In der linken Hälfte von Fig. 2 wird ein großer Abstand A zwischen Hüftgurt 17 und Rückenpolster 18 dargestellt, der durch einen Großbuchstaben A symbolisiert wird, während in der rechten Hälfte von Fig. 2 ein kleiner Abstand a zwischen Hüftgurt 17 und Rückenpolster 18 dargestellt wird, der durch einen Kleinbuchstaben a symbolisiert wird. Darüber hinaus werden in Fig. 2 die einzelnen Abschnitte 15, 16 des Kragarms 5 dargestellt, wobei der Kragarm 5 einen Rückenabschnitt 15, einen Kopfabschnitt 16 und einen Übergangsabschnitt umfassen kann. Während der Rückenabschnitt 15 und der Kopfabschnitt 16 im Wesentlichen senkrecht zueinander angeordnet sind, liegt der Übergangsabschnitt in einem Übergangsbereich zwischen Rückenabschnitt 15 und Kopfabschnitt 16 des Kragarms 5 vor. Die Einstellbarkeit des Abstandes A kann insbesondere durch die Vorsehung einer Linearführung (nicht dargestellt) ermöglicht werden.

**Bezugszeichenliste**

| 1  | System |
|----|--------|
| 2  | Gewichtskraft |
| 3  | Gegenstand |
| 4  | Zugseil |
| 5  | Kragarm |
| 6  | Rückenstruktur |
| 7  | erstes, vorderes Ende des Kragarms |
| 8  | zweites, hinteres Ende des Kragarms |
| 9  | Gegenkraft |
| 10 | elektronisches Modul |
| 11 | Energiequelle |
| 12 | Vorrichtung zum Aufwickeln des Zugseils |
| 13 | Motor |
| 14 | Steuereinrichtung |
| 15 | Rückenabschnitt des Kragarms |
| 16 | Kopfabschnitt des Kragarms |
| 17 | erster Kontaktbereich, Hüftgurt |
| 18 | zweiter Kontaktbereich, Rückenpolster |
| 19 | Kippmoment |
| 20 | Nutzer |
| 21 | Kopf des Nutzers |
| 34 | Getriebe |
| A  | Abstand |
| V  | vorne |
| H  | hinten |
| O  | oben |
| U  | unten |
| X  | erste Position des Gegenstands |

**Patentansprüche**

1. Verfahren zum Ausgleich einer Gewichtskraft (2) eines Gegenstands (3) in einem System (1), wobei der Gegenstand (3) an einem Zugseil (4) befestigt werden kann, wobei das Verfahren durch die folgenden **Verfahrensschritte gekennzeichnet ist:**

   a) Befestigen des Gegenstands (3) an dem Zugseil (4),
   b) Ermitteln einer Drehzahl des Motors (13) und/oder einer Ableitung der Drehzahl des Motors (13),

c) Ermitteln eines Stromsollwerts (S) bei längerem Unterschreiten eines Grenzwerts der Drehzahl des Motors (13),

d) Ausgleich der Gewichtskraft (2) des Gegenstands (3) unter Verwendung des in Schritt c) ermittelten Stromsollwerts (S).

2. Alternatives Verfahren zum Ausgleich einer Gewichtskraft (2) eines Gegenstands (3) in einem System (1), wobei der Gegenstand (3) an einem Zugseil (4) befestigt werden kann, wobei das Verfahren durch die folgenden **Verfahrensschritte gekennzeichnet ist:**

   a) Ermitteln einer ersten Position (X) des Gegenstands (3),

   b) Ermitteln einer Drehzahl des Motors (13) oder einer Ableitung der Drehzahl des Motors (13),

   c) Hinterlegen der ersten Position (X) als Regelgröße in dem System (1), wenn die Drehzahl des Motors (13) und/oder die Ableitung der Drehzahl des Motors (13) einen Grenzwert überschreitet,

   d) Regelung der Position des Gegenstandes (3) auf die hinterlegte Position (X), bis eine Geschwindigkeit des Gegenstands (3) für einen Zeitraum Delta t im Wesentlichen «null» ist,

   e1) Hinterlegen eines für eine Aufrechterhaltung der ersten Position (X) erforderlichen Stromwerts I_X in dem System (1) oder

   e2) Hinterlegung eines für eine Aufrechterhaltung der ersten Position (X) erforderlichen Drehmoments M_X in dem System (1),

   f) Ausgleich der Gewichtskraft unter Verwendung des in Schritt e1 hinterlegten Stromwerts I_X oder des in Schritt e2 hinterlegten Drehmoments M_X.

3. Verfahren nach Anspruch 1 oder 2,
   **dadurch gekennzeichnet, dass**
   die Drehzahl des Motors (13) einer Geschwindigkeit des Zugseils (4) entspricht.

4. Verfahren nach einem der vorhergehenden Ansprüche
   **dadurch gekennzeichnet, dass**
   das Verfahren eine Bremsfunktion umfasst, um ein unterwünschtes Herabfallen des Gegenstands (3) zu verhindern.

5. System (1) zur Durchführung des Verfahrens nach einem der vorhergehenden Ansprüche, **dadurch gekennzeichnet, dass**
   das System (1) ein elektronisches Modul (10) mit

   - einer Energiequelle (11) zur Versorgung des Systems (1) mit elektrischer Energie,
   - einer Vorrichtung (12) zum Aufwickeln des Zugseils (4),
   - einem Motor (13) zum Antrieb der Vorrichtung (12) zum Aufwickeln des Zugseils (4), und
   - einer Steuereinrichtung (14) umfasst.

6. System (1) nach Anspruch 5
   **dadurch gekennzeichnet, dass**
   das elektronische Modul (10) ein Getriebe (34) aufweist, wobei das Getriebe (34) eine Übersetzung zwischen 2 und 15 und bevorzugt zwischen 4 und 12 aufweist.

7. System (1) nach einem der Ansprüche 5 oder 6
   **dadurch gekennzeichnet, dass**
   das Getriebe (34) an seinem Ausgang eine Rolle aufweist, wobei die Rolle einen Durchmesser in einem Bereich von 10 bis 200 mm aufweist, bevorzugt in einem Bereich von 20 bis 150 mm und besonders bevorzug in einem Bereich von 40 bis 120 mm.

8. System (1) nach einem der Ansprüche 5 bis 7
   **dadurch gekennzeichnet, dass**
   der Motor (13) ein Außenläufermotor ist.

9. System (1) nach einem der Ansprüche 5 bis 8
   **dadurch gekennzeichnet, dass**
   der Motor (13) eine Polzahl aufweist, die größer als 6 ist.

10. System (1) nach einem der Ansprüche 5 bis 9
    **dadurch gekennzeichnet, dass**
    das System (1) mindestens einen Sensor zur Erfassung einer Beschleunigung und/in einer Drehrate umfasst.

11. Elektronisches Modul (10) zur Durchführung des Verfahrens nach einem der Ansprüche 1 bis 4
    **dadurch gekennzeichnet, dass**
    das elektronische Modul (10)

    - eine Energiequelle (1) zur Versorgung des elektronischen Moduls (10) mit elektrischer Energie,
    - eine Vorrichtung (12) zum Aufwickeln des Zugseils (4),
    - einen Motor (13) zum Antrieb der Vorrichtung (12) zum Aufwickeln des Zugseils (4) und
    - eine Steuereinrichtung (14) umfasst.

12. Elektronisches Modul (10) nach Anspruch 11
    **dadurch gekennzeichnet, dass**
    das elektronische Modul (10) ein Getriebe (34) umfasst.

**Fig. 1**

**Fig. 2**

**Europäisches Patentamt**
**European Patent Office**
**Office européen des brevets**

# EUROPÄISCHER RECHERCHENBERICHT

**Nummer der Anmeldung**

EP 21 16 9810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 886 812 B2 (KAZEROONI HOMAYOON [US]) 3. Mai 2005 (2005-05-03) | 1-12 | INV. H02P3/02 |
| Y | * Spalte 9, Zeile 1 - Zeile 17; Ansprüche 20,52; Abbildung 1 * ----- | 1-12 | B23B45/02 B25J9/00 B66D3/18 |
| Y | EP 3 403 775 A1 (KUBOTA KK [JP]) 21. November 2018 (2018-11-21) * Absatz [0071] - Absatz [0150]; Abbildungen 1,4,6,7 * ----- | 1-12 | B66C13/08 B23B35/00 |
| Y | FR 2 978 690 A1 (DAVEZAC PIERRE ANDRE [FR]) 8. Februar 2013 (2013-02-08) * Seite 8 - Seite 12; Abbildungen 1,7, * ----- | 1-12 | |

**RECHERCHIERTE SACHGEBIETE (IPC)**

H02P
B23B
B25J
B66D
B66C

Der vorliegende Recherchenbericht wurde für alle Patentansprüche erstellt

| Recherchenort | Abschlußdatum der Recherche | Prüfer |
|---|---|---|
| München | 15. Oktober 2021 | Kruip, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 9810

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2021

| Im Recherchenbericht angeführtes Patentdokument | Datum der Veröffentlichung | Mitglied(er) der Patentfamilie | Datum der Veröffentlichung |
|---|---|---|---|
| US 6886812 B2 | 03-05-2005 | US 6386513 B1<br>US 2002100899 A1<br>US 2003189197 A1<br>WO 0069771 A1 | 14-05-2002<br>01-08-2002<br>09-10-2003<br>23-11-2000 |
| EP 3403775 A1 | 21-11-2018 | CN 108430714 A<br>EP 3403775 A1<br>KR 20180102643 A<br>WO 2017122502 A1 | 21-08-2018<br>21-11-2018<br>17-09-2018<br>20-07-2017 |
| FR 2978690 A1 | 08-02-2013 | KEINE | |

EPO FORM P0461

Für nähere Einzelheiten zu diesem Anhang : siehe Amtsblatt des Europäischen Patentamts, Nr.12/82